# EUROPÄISCHE PATENTSCHRIFT

(11) **EP 3 710 323 B1**
(45) Veröffentlichungstag und Bekanntmachung des Hinweises auf die Patenterteilung: **28.07.2021**
(21) Anmeldenummer: 18800044.2
(22) Anmeldetag: 16.10.2018
(51) Int. Cl.: B60T 11/16

(54) **HYDRAULISCHES AGGREGAT ZUM ERZEUGEN VON BREMSDRUCK FÜR EINE HYDRAULISCHE BREMSANLAGE**
HYDRAULIC UNIT FOR GENERATING BRAKE PRESSURE FOR A HYDRAULIC BRAKE SYSTEM
UNITÉ HYDRAULIQUE POUR GÉNÉRER DE LA PRESSION POUR UN SYSTÈME DE FREIN HYDRAULIQUE

(30) Priorität: 14.11.2017 DE 102017220206
(43) Veröffentlichungstag der Anmeldung: 23.09.2020
(73) Patentinhaber: Continental Teves AG & Co. OHG, 60488 Frankfurt am Main (DE)
(72) Erfinder: LOKE, Jörg, 65611 Brechen (DE); KRÄMER, Horst, 65462 Ginsheim-Gustavsburg (DE); RÜFFER, Manfred, 65843 Sulzbach (DE); BISCHOFF, Andreas, 60437 Frankfurt am Main (DE); GERBER, Sascha, 65307 Bad Schwalbach (DE); KNEWITZ, Ingo, 61267 Neu Anspach (DE)
(74) Vertreter: Continental Corporation
(86) Internationale Anmeldenummer: PCT/EP2018/078180
(87) Internationale Veröffentlichungsnummer: WO 2019/096516

(56) Entgegenhaltungen:
- WO-A1-92/02732
- WO-A1-2017/001282
- DE-A1- 1 505 460
- DE-A1- 2 820 299

## Beschreibung

Die Erfindung bezieht sich auf ein hydraulisches Aggregat zum Erzeugen von Bremsdruck mit Merkmalen nach dem Oberbegriff des Hauptanspruchs 1, insbesondere einen Hauptbremszylinder für eine hydraulische Kraftfahrzeugbremsanlage sowie die entsprechende Bremsanlage.

Die Gehäuse derartiger Aggregate werden meistens aus Leichtmetalllegierungen hergestellt. Üblicherweise wird dabei zunächst mit Urformverfahren ein Gussrohling erzeugt - beispielsweise im Kokillengussverfahren. Ein derart erzeugter Gussrohling weist herstellbedingt zunächst vergleichsweise grobe Maß- und Oberflächentoleranzen und wird danach mit spanabhebenden Verfahren mit erforderlichen eng tolerierten Funktionselementen und Profilen, wie beispielsweise diversen Anschlüssen, Verbindungskanälen, Bohrungen, Dichtflächen, Nuten und Dergleichen versehen, sowie gegebenenfalls anschließend mit einer Schutzschicht überzogen.

So ist es bekannt, im Gussrohling Aufnahmekavitäten zur späteren Aufnahme von Anschlussstutzen eines Fluidbehälters vorzusehen, die nach dem Gießen durch Zerspanung - beispielsweise durch Ausbohren, Fräsen oder Ausdrehen - mit einem spezifischen Aufnahmeprofil zur dichtenden Anlage einer Stutzendichtung versehen werden.

Die Aufnahmekavität wird über eine Verbindungsbohrung mit einer sogenannten Nachlaufnut verbunden - einer Radialinnennut in der Mantelfläche der Kolbenbohrung, welche einer gleichmäßigen Benetzung der Kolbenaußenfläche mit Bremsflüssigkeit aus dem Fluidbehälter dient. Technologisch bedingt wird eine derartige Verbindungsbohrung meist vor dem Ausdrehen der Aufnahmekavität erzeugt. Ein stätiger Wunsch, den in den Motorraum ragenden Teil des Hauptbremszylinders zu verkürzen und diesen immer kompakter zu gestalten führt dazu, dass die Nachlaufnut konstruktionsbedingt nicht direkt unterhalb der zugeordneten Aufnahmekavität angeordnet werden kann und axial immer weiter weg angeordnet werden muss. Als Folge muss die Verbindungsbohrung entweder schräg gebohrt werden oder es wird zunächst eine größere, grob tolerierte Vorbohrung - sogenannte Pilotbohrung - durch einen Teil der Wandung der Aufnahmekavität erzeugt. Die eng tolerierte Verbindungsbohrung wird dann in der Vorbohrung erzeugt.

Die damit einhergehenden Werkzeugwechsel, Umspannungen oder Lageänderungen des Gussrohlings, verbunden mit langen Verweilzeiten in den Werkzeugmagazinen, erhöhen die Herstellkosten erheblich.

Eine aus DE 2820299 A1 zum Zwecke des Toleranzausgleichs vorgeschlagene Lösung sieht vor, dass zur Abdichtung der Anschlussstuzen des Behälters exzentrische Dichtstopfen verwendet werden. Dies setzt voraus, dass entsprechende Aufnahmeprofile in dem Gehäuse mit einem größeren Durchmesser ausgebildet sind als es für die Abdichtung von einzelnen Anschlussstuzen - Aufnahmeprofil - Paarungen erforderlich wäre. Dies erhöht jedoch unnötig das Volumen, das Gewicht, den Werkstoffeinsatz und das Zerspanvolumen des Gussrohlings und erscheint aus heutiger Sicht unökonomisch.

Die Erfindung beruht somit auf der Aufgabe, ein verbessertes und insbesondere herstelltechnisch optimiertes hydraulisches Aggregat anzubieten.

Die Aufgabe wird erfindungsgemäß durch ein hydraulisches Aggregat mit der Merkmalskombination nach dem Hauptanspruch 1 gelöst. Unteransprüche zusammen mit Figurenbeschreibungen geben weitere vorteilhafte Ausführungen und Weiterbildungen der Erfindung an.

Die Erfindung sieht vor, dass die Aufnahmekavität in ihrem Querschnitt und insbesondere deren Boden nichtkreisförmig sowie entlang der Kolbenbohrungsachse gestreckt ausgebildet sind.

Dabei können der Querschnitt und der Boden anhand verschiedener erfindungsgemäßer Ausführungen beispielsweise im Wesentlichen elliptisch vorgesehen sein oder eine im Wesentlichen elliptische oder runde Grundform aufweisen mit wenigstens einer Erweiterungsfläche, welche entlang der Kolbenbohrungsachse an die Grundform angeschlossen und quer zur Kolbenbohrungsachse schmaler als die Grundform vorgesehen ist.

Durch eine derart gestaltete Gusskontur kann der Boden der Aufnahmekavität effektiv vergrößert werden und so eine optimierte Anlagefläche für senkrechte Auflage des Bohrwerkzeugs bieten. Eine orthogonale Verbindungsbohrung wird so unmittelbar in den Boden, zu seinem Rand versetzt, unter Einhaltung von engen Toleranzen gebohrt. Auf eine zusätzliche Vorbohrung oder eine Schrägbohrung kann verzichtet werden. Bearbeitungszeiten und Kosten werden durch die damit einhergehende Vermeidung von Werkzeugwechsel und Umspannungen sowie verringerten Zerspanvolumen signifikant verringert.

Als überraschender Nebeneffekt wird wegen dem verringerten Gussvolumen das Gewicht des Gussrohlings ebenfalls eingespart und Werkstoffkosten gesenkt.

Besonders vorteilhaft kann die Erfindung bei dem Gehäuse eines Tandem-Hauptbremszylinders angewandt werden, um eine die Kompaktheit fördernde große axiale Versetzung der Radialinnennut relativ zu der zugeordneten Aufnahmekavität zu realisieren.

Des Weiteren beanspruch die Erfindung eine hydraulische Kraftfahrzeugbremsanlage, die mit einem erfindungsgemäßen hydraulischen Aggregat ausgestattet ist.

Weitere Merkmale und Vorteile der Erfindung ergeben sich aus der nachfolgenden Beschreibung eines Ausführungsbeispiels und den Zeichnungen. Hierbei zeigen:
Fig.1 beispielhaft, nicht maßstäblich und stark vereinfacht einen typischen, gattungsgemäßen Gussrohling eines Tandem-Hauptbremszylinders in einem unbearbeiteten Zustand in Schnittdarstellung.
Fig.2 ebenso stark vereinfacht das Gehäuse eines gattungsgemäßen Tandem-Hauptbremszylinders mit angedeuteten durch Zerspanen hergestellten Elementen, mit einer bekannten schrägen Verbindungsbohrung und einer weiteren bekannten, in einer Vorbohrung angeordneten Verbindungsbohrung, sowie einigen Komponenten des hydraulischen Aggregats, im Axialschnitt.
Fig.3 einen vergrößerten Ausschnitt des Gussrohlings im Bereich der Aufnahmekavität mit angedeuteten durch Zerspanen hergestellten Elementen, und einer bekannten schrägen Verbindungsbohrung, im Axialschnitt.
Fig.4 Ansicht gemäß Fig.3, jedoch mit einer ersten erfindungsgemäßen Ausführung der Aufnahmekavität.
Fig.5 eine weitere bekannte Ausführung mit in einer Vorbohrung angeordneten Verbindungsbohrung in Draufsicht.
Fig.6 eine erste erfindungsgemäße Ausführung der Aufnahmekavität in Draufsicht.
Fig.7 eine weitere erfindungsgemäße Ausführung der Aufnahmekavität in Draufsicht.

### Fig.1

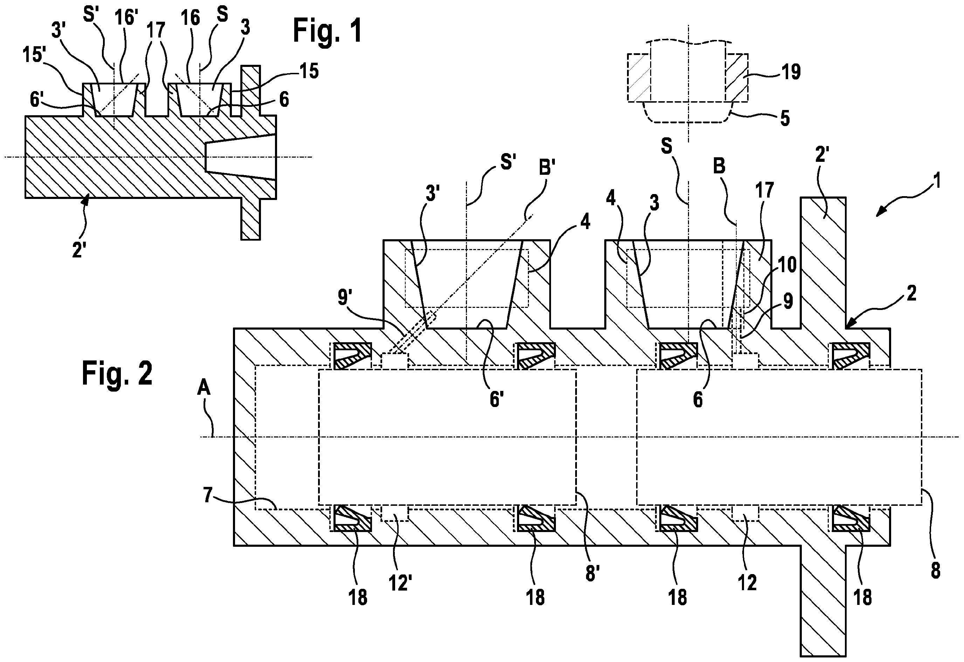

Im gezeigten Beispiel ist ein Gussrohling 2' eines Tandem-Hauptbremszylinders gezeigt. Der Gussrohling 2' wird meist in einem Kokillengießverfahren aus einer Aluminiumlegierung hergestellt und anschließend mit durch Zerspannen mit erforderlichen Profilen und Funktionselementen versehen und dadurch zu einem bearbeiteten Gehäuse 2 gewandelt, wie insbesondere in der Fig.2 angedeutet. Im Gussrohling 2'sind eine erste 3 und eine zweite 3' Aufnahmekavitäten vorgesehen, die im Wesentlichen napfförmig mit einer Öffnung 16 und einem flachen Boden 6, 6' ausgebildet sind. Die beiden Aufnahmekavitäten 3, 3' sind jeweils in einer quer zu einer Kolbenbohrungsachse A nach außen ragenden ersten 15 und zweiten 15' Erhebungen angeordnet, wodurch sie jeweils von einer Wandung 17 begrenzter Dicke radial umschlossen sind.

### Fig.2

Fig.2 zeigt einige Komponenten eines gattungsgemäßen, als Tandem-Hauptbremszylinder ausgebildeten hydraulischen Aggregats 1 mit einem bearbeiteten Gehäuse 2, wobei die durch Zerspanen hergestellten Elemente gestrichelt dargestellt sind. gezeigt. In dem Gehäuse 2 ist entlang einer Kolbenbohrungsachse A eine sackförmige Kolbenbohrung 7 angeordnet. In der Kolbenbohrung 7 sind in Tandembauweise ein erster 8 und ein zweiter 8' Kolben verschiebbar sowie durch Kolbendichtungen 18 gegenüber der Kolbenbohrung 7 abgedichtet aufgenommen.

Eine erste 12 und eine zweite 12', in der Mantelfläche der Kolbenbohrung 7 vorgesehenen Radialinnennuten umgeben jeweils einen der Kolben 8,8' und dienen zur gleichmäßigen Verteilung von Bremsflüssigkeit.

Die Aufnahmekavitäten 3,3' sind, durch Zerspannung der ursprünglichen Napfform zu jeweils einem um die Steckachse S rotationssymmetrischen Aufnahmeprofil 4, 4' erweitert. In dem Aufnahmeprofil 4, 4' wird jeweils ein Anschlussstutzen 5 eines nicht gezeigten Fluidbehälters mitsamt der Stützendichtung 19 aufgenommen, welche entlang der Steckachse hinein gesteckt werden. Die Verbindungsbohrungen 9, 9' verbinden die Aufnahmekavitäten 3,3' mit den zugeordneten Radialinnennuten 12, 12', um die Kolbenbohrung 7 mit Bremsflüssigkeit aus dem Fluidbehälter zu speisen.

Weil die beiden Radialinnennuten 12,12' sich nicht unmittelbar unterhalb der flachen Böden 6, 6' der Aufnahmekavitäten 3,3' befinden, sondern versetzt entlang der Kolbenachse A positionier sind, ist die zweite Verbindungsbohrung 9' schräg, nichtparallel zu der Steckachse S gebohrt. Die erste, parallel zu der Steckachse S ausgerichtete Verbindungsbohrung 9 ist in einer gesonderten, sackförmigen, großen Vorbohrung 10 positioniert, welche zuvor in die Aufnahmekavität 3 teilweise in die Wandung 17 gebohrt wurde.

### Fig.3

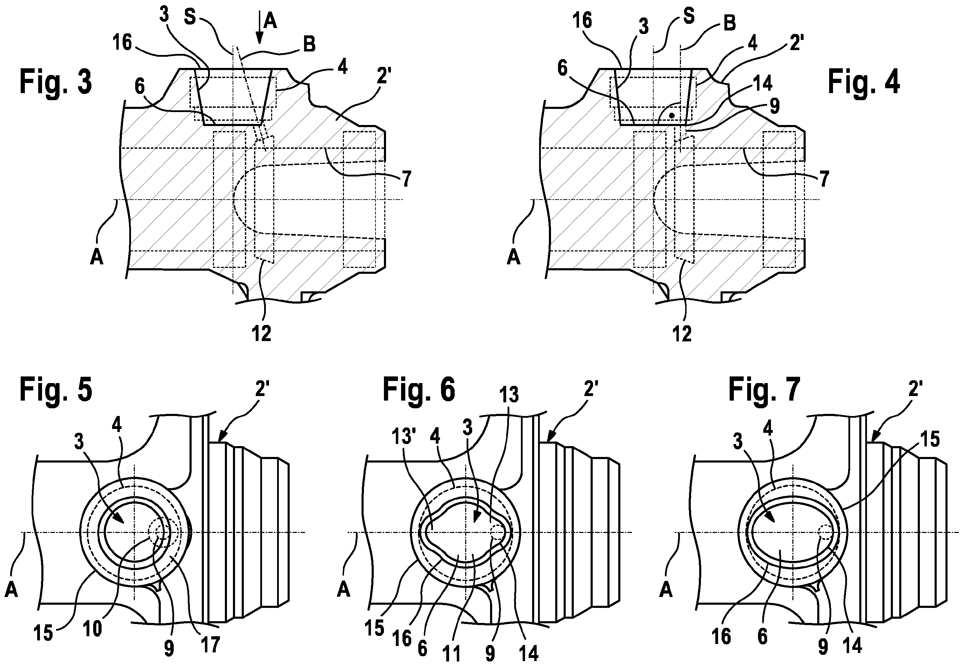

Die der Fig.2 dargestellte konstruktive Lösung mit einer schrägen Verbindungsbohrung 9 ist in der Fig.3 vergrößert anhand eines weiteren Ausführungsbeispiels gezeigt.

### Fig.4

In der Fig.4 ist eine erste erfindungsgemäße Ausführungsform gezeigt. Wie insbesondere aus den Figuren 6 und 7 zu entnehmen, ist die erfindungsgemäße Aufnahmekavität 3 entlang der Kolbenbohrungsachse A gestreckt ausgebildet, so dass sie entlang der Kolbenbohrungsachse A eine größere Ausdehnung besitzt als in Querrichtung. Mit der Streckung der Aufnahmekavität 3 ist auch deren Boden 6 entlang der Kolbenbohrungsachse A verlängert. Die Verbindungsbohrung 9 ist zum äußeren Rand 14 des Bodens 6 versetzt positioniert und unmittelbar in den Boden 6 orthogonal zu diesem gebohrt; trifft dabei die zugeordnete Radialinnennut 12.

### Fig.5

Die in der Fig.2 dargestellte konstruktive Lösung mit einer in der Vorbohrung 10 positionierten Verbindungsbohrung 9 ist in der Fig.5 anhand eines weiteren Ausführungsbeispiels in Draufsicht gezeigt. Die Aufnahmekavität 3 ist im Querschnitt kreisrund rotationssymmetrisch gestaltet. Die im Vergleich mit der Verbindungsbohrung 9 deutlich größere Vorbohrung 10 wird der Aufnahmekavität 3 gebohrt, um eine erforderliche Anlagefläche für die Verbindungsbohrung 9 zu schaffen, deren Bohrwerkzeug wegen der engen Toleranzen und kleinerem Durchmesser keinen Querkräften ausgesetzt werden darf, wie sie beim teilweisen anbohren der Wandung 17 entstünden.

### Fig.6

In der Fig.6 ist eine erste erfindungsgemäße Ausführung der Aufnahmekavität 3 in Draufsicht gezeigt. Im Unterschied zu der bekannten Ausführung nach Fig.5 ist die erfindungsgemäße Aufnahmekavität 3 ist in ihrem Schnitt quer zu der Steckachse S nichtkreisförmig sowie entlang der Kolbenbohrungsachse A gestreckt gestaltet. Der Rand 14 des Bodens 6 folgt dem Querschnittsprofil der Aufnahmekavität 3.

Dabei weist der Boden 6 und somit auch der Querschnittsprofil der Aufnahmekavität 3 eine im Wesentlichen runde Grundform 11 an die zwei Erweiterungsflächen 13, 13' angeschlossen sind und so den Boden 6 und somit auch den Querschnittsprofil der Aufnahmekavität 3 entlang der Kolbenbohrungsachse A erweitern. Die Verbindungsbohrung 9 ist dabei in der Erweiterungsfläche 13 positioniert.

Die Grundform 11 kann innerhalb der Erfindung auch eine nichtrunde Form haben wie vergleichbar mit einer Ellipse, einem Vieleck mit verrundeten Ecken und Dergleichen.

### Fig.7

In der Fig.7 ist eine weitere erfindungsgemäße Ausführungsform dargestellt. Der Boden 6 und somit auch der Querschnittsprofil der Aufnahmekavität 3 sind hier im Unterschied zu der Ausführungsform nach Fig.6 im Wesentlichen elliptisch vorgesehen.

Die Verbindungsbohrung 9 ist hier auf der Hauptachse der Ellipse in der Nähe eines Scheitelpunktes positioniert.

## Patentansprüche

1. Hydraulisches Aggregat (1) zum Erzeugen von Bremsdruck für eine hydraulische Bremsanlage, umfassend ein Gehäuse (2), welches aus einem Gussrohling (2') hergestellt ist, wobei der Gussrohling (2') wenigstens eine Aufnahmekavität (3) aufweist, die zum Zerspanen zu einem Aufnahmeprofil (4) zur abdichtenden Aufnahme eines mit einem Fluidbehälter verbundenen Anschlussstutzens (5) vorgesehen ist, welcher entlang einer Steckachse (S) in das Aufnahmeprofil (4) steckbar ist, wobei das Gehäuse (2) wenigstens eine Kolbenbohrung (7) zur Aufnahme von wenigstens einem Kolben (8) umfasst, welche entlang einer Kolbenbohrungsachse (A) in den Gussrohling (2') getrieben ist **dadurch gekennzeichnet, dass** die Aufnahmekavität (3) in einem Schnitt quer zu der Steckachse (S) nichtkreisförmig sowie entlang der Kolbenbohrungsachse (A) gestreckt ausgebildet ist.

2. Hydraulisches Aggregat (1) nach Anspruch 1 **dadurch gekennzeichnet, dass** die Aufnahmekavität (3) im Wesentlichen napfförmig mit einer Öffnung (16) und einem Boden (6) ausgebildet ist und der Boden (6) im Wesentlichen eben, nichtkreisförmig sowie entlang der Kolbenbohrungsachse (A) gestreckt ausgebildet ist.

3. Hydraulisches Aggregat (1) nach Anspruch 2 **dadurch gekennzeichnet, dass** der Boden (6) im Wesentlichen elliptisch vorgesehen ist.

4. Hydraulisches Aggregat (1) nach Anspruch 2 **dadurch gekennzeichnet, dass** der Boden (6) eine im Wesentlichen elliptische oder runde Grundform (11) aufweist mit wenigstens einer Erweiterungsfläche (13), welche entlang der Kolbenbohrungsachse (A) an die Grundform (11) angeschlossen ist und quer zur Kolbenbohrungsachse (A) schmaler als die Grundform (11) vorgesehen ist.

5. Hydraulisches Aggregat (1) nach Anspruch 2 **dadurch gekennzeichnet, dass** das Gehäuse (2) eine Verbindungsbohrung (9) zur hydraulischen Verbindung der Aufnahmekavität (3) mit der Kolbenbohrung (7) aufweist, welche unmittelbar in den Boden (6) gebohrt und orthogonal zu diesem ausgerichtet ist.

6. Hydraulisches Aggregat (1) nach Anspruch 5 **dadurch gekennzeichnet, dass** die Verbindungsbohrung (9) in einer Radialinnennut (12) mündet, die in einer Mantelfläche der Kolbenbohrung (7) angeordnet ist.

7. Hydraulisches Aggregat (1) nach Anspruch 1 **dadurch gekennzeichnet,** die Aufnahmekavität (3) in einer am Gussrohling (2') quer zur Kolbenbohrungsachse (A) nach außen ragenden Erhebung (15) angeordnet ist.

8. Hydraulisches Aggregat (1) nach wenigstens einem der Ansprüche 1 bis 7 **dadurch gekennzeichnet, dass** der Gussrohling (2') in einem Kokillengießverfahren aus einer Aluminiumlegierung hergestellt ist.

9. Hydraulisches Aggregat (1) nach wenigstens einem der Ansprüche 1 bis 8 **dadurch gekennzeichnet, dass** das Aggregat (1) ein Hauptbremszylinder mit in der Kolbenbohrung (7) in Tandembauweise hintereinander angeordneten ersten (8) und zweiten (8') Kolben ist.

10. Hydraulische Kraftfahrzeugbremsanlage mit einem hydraulischen Aggregat (1) nach einem der Ansprüche 1 bis 9.

## Claims

1. Hydraulic unit (1) for generating brake pressure for a hydraulic brake system, comprising a housing (2) which is produced from a cast blank (2'), wherein the cast blank (2') has at least one receiving cavity (3) which is provided for machining to form a receiving profile (4) for sealingly receiving a connecting piece (5), which is connected to a fluid container and can be plugged into the receiving profile (4) along a plug-in axis (S), wherein the housing (2) comprises at least one piston bore (7) for receiving at least one piston (8), which is driven along a piston bore axis (A) into the cast blank (2'), **characterized in that** the receiving cavity (3) is non-circular in a section transversely with respect to the plug-in axis (S) and is stretched along the piston bore axis (A).

2. Hydraulic unit (1) according to Claim 1, **characterized in that** the receiving cavity (3) is substantially cup-shaped with an opening (16) and a base (6), and the base (6) is substantially flat and non-circular and is stretched along the piston bore axis (A).

3. Hydraulic unit (1) according to Claim 2, **characterized in that** the base (6) is provided in substantially elliptical form.

4. Hydraulic unit (1) according to Claim 2, **characterized in that** the base (6) has a substantially elliptical or round basic shape (11) with at least one extension surface (13), which is connected to the basic shape (11) along the piston bore axis (A) and is provided in narrower form transversely with respect to the piston bore axis (A) than the basic shape (11).

5. Hydraulic unit (1) according to Claim 2, **characterized in that** the housing (2) has a connecting bore (9) for hydraulically connecting the receiving cavity (3) to the piston bore (7) which is bored directly into the base (6) and is oriented orthogonally with respect thereto.

6. Hydraulic unit (1) according to Claim 5, **characterized in that** the connecting bore (9) opens into a radially inside groove (12) which is arranged in a lateral surface of the piston bore (7).

7. Hydraulic unit (1) according to Claim 1, **characterized in that** the receiving cavity (3) is arranged in an elevation (15) protruding outward on the cast blank (2') transversely with respect to the piston bore axis (A).

8. Hydraulic unit (1) according to at least one of Claims 1 to 7, **characterized in that** the cast blank (2') is produced from an aluminum alloy by permanent mold casting.

9. Hydraulic unit (1) according to at least one of Claims 1 to 8, **characterized in that** the unit (1) is a master brake cylinder with a first piston (8) and a second piston (8') arranged one behind the other in a tandem construction in the piston bore (7).

10. Hydraulic motor vehicle brake system having a hydraulic unit (1) according to any of Claims 1 to 9.

## Revendications

1. Groupe hydraulique (1) destiné à générer de la pression de freinage destinée à un système de freinage hydraulique, ledit groupe comprenant un boîtier (2) qui est réalisé à partir d'une ébauche de coulée (2'), l'ébauche de coulée (2') comportant au moins une cavité de réception (3) qui est prévue pour être usinée de façon à obtenir un profil de réception (4) destiné à recevoir de manière étanche une tubulure de raccordement (5) qui est reliée à un réservoir de fluide et qui peut être enfichée dans le profil de réception (4) le long d'un axe d'enfichage (S), le boîtier (2) comprenant au moins un alésage de piston (7) qui est destiné à recevoir au moins un piston (8) et qui est ménagé le long d'un axe d'alésage de piston (A) jusque dans l'ébauche de coulée (2'), **caractérisé en ce que** la cavité de réception (3) est conçue de manière à avoir une forme non circulaire dans une vue en coupe transversale à l'axe d'enfichage (S) et à être allongée le long de l'axe d'alésage de piston (A).

2. Groupe hydraulique (1) selon la revendication 1, **caractérisé en ce que** la cavité de réception (3) est sensiblement en forme de cuvette pourvue d'une ouverture (16) et d'un fond (6) et le fond (6) est conçu pour être sensiblement plan, non circulaire et allongé le long de l'axe d'alésage de piston (A).

3. Groupe hydraulique (1) selon la revendication 2, **caractérisé en ce que** le fond (6) est prévu pour être sensiblement elliptique.

4. Groupe hydraulique (1) selon la revendication 2, **caractérisé en ce que** le fond (6) a une forme de base (11) sensiblement elliptique ou ronde avec au moins une surface d'extension (13) qui est raccordée le long de l'axe d'alésage de piston (A) à la forme de base (11) et qui est prévue pour être plus étroite que la forme de base (11) transversalement à l'axe d'alésage de piston (A).

5. Groupe hydraulique (1) selon la revendication 2, **caractérisé en ce que** le boîtier (2) comporte un alésage de liaison (9) qui est destiné à relier hydrauliquement la cavité de réception (3) à l'alésage de piston (7) et qui est ménagé directement dans le fond (6) et orienté orthogonalement à celui-ci.

6. Groupe hydraulique (1) selon la revendication 5, **caractérisé en ce que** l'alésage de liaison (9) débouche dans une gorge intérieure radiale (12) qui est ménagée dans une surface latérale de l'alésage de piston (7).

7. Groupe hydraulique (1) selon la revendication 1, **caractérisé en ce que** la cavité de réception (3) est ménagée dans une surélévation (15) saillant vers l'extérieur transversalement à l'axe d'alésage de piston (A) au niveau de l'ébauche de coulée (2').

8. Groupe hydraulique (1) selon l'une au moins des revendications 1 à 7, **caractérisé en ce que** l'ébauche de coulée (2') est réalisée à partir d'un alliage d'aluminium selon un procédé de coulée en coquille.

9. Groupe hydraulique (1) selon l'une au moins des revendications 1 à 8, **caractérisé en ce que** le groupe (1) est un maître-cylindre de frein comprenant des premier (8) et deuxième (8') pistons disposés l'un derrière l'autre en tandem dans l'alésage de piston (7) .

10. Système de freinage hydraulique de véhicule automobile comprenant un groupe hydraulique (1) selon l'une des revendications 1 à 9.
